# EUROPEAN PATENT SPECIFICATION

(11) **EP 2 247 193 B1**
(45) Date of publication and mention of the grant of the patent: **15.10.2014**
(21) Application number: 09706653.4
(22) Date of filing: 23.01.2009
(51) Int. Cl.: A23L 1/212, A23L 1/36, A23G 3/54, A23G 3/34, A23G 1/54, A23G 1/30, A23L 1/00

(54) **COATED CONFECTIONERY PRODUCT**
BESCHICHTETES KONFEKTPRODUKT
PRODUIT DE CONFISERIE ENROBÉ

(30) Priority: 30.01.2008 GB 0801676
(43) Date of publication of application: 10.11.2010
(73) Proprietor: Mondelez UK Holdings & Services Limited, Uxbridge, Middlesex UB8 1DH (GB)
(72) Inventor: LAGACHE, Sylvie, Singapore 659637 (SG); DEMEULEMEESTER, Patrice, F-59126 Linselles (FR); MONTAIGNE, Nathalie, F-59706 Marcq en Baroeul (FR)
(74) Representative: Ward, David Ian
(86) International application number: PCT/GB2009/000198
(87) International publication number: WO 2009/095647

(56) References cited:
- EP-A- 0 267 757
- EP-A- 0 608 950
- GB-A- 1 447 578
- US-A- 3 527 646
- US-A- 4 161 545
- US-A- 4 499 113
- US-A- 4 663 175
- US-A- 5 258 187
- US-A- 5 433 961
- US-A- 5 571 546
- US-A1- 2004 067 282

## Description

The present invention relates to a coated confectionery product and a process for making a coated confectionery product.

It is known to prepare chocolate-coated confectionery products, for example, by enrobing or panning centres such as nuts, dried fruit, or toffee. It is also known to prepare sugar-shelled confectionery products such as sugared almonds and Mini-eggs® (Cadbury Limited) by sugar panning a centre. There is a desire for new types of coated confectionery products, especially for those that offer different textures, flavours and mouthfeel.

The object of the present invention is to provide a new type of confectionery product based on a confectionery centre and an expanded starch coating, and a process for making such a confectionery product.

According to a first aspect of the present invention there is provided a process for the preparation of a starch-coated confectionery product comprising the following steps:
(i) providing a heat-sensitive centre;
(ii) wetting the heat-sensitive centre;
(iii) coating the wetted heat-sensitive centre with a starch-based powder; and
(iv) expanding the starch-based powder to produce the starch-coated confectionery product,
wherein the heat-sensitive centre is coated with a protective coating prior to the first coating with the starch-based powder, the protective coating consisting of a low amylopectin starch.

According to a second aspect of the present invention there is provided a confectionery product comprising a heat-sensitive centre enclosed successively within a protective coating and an expanded starch coating producible by the process of the first aspect wherein the protective coating consists of a low amylopectin starch.

According to a third aspect of the present invention there is provided a starch-coated confectionery product comprising a heat-sensitive centre enclosed successively within a protective coating and an expanded starch coating, wherein the protective coating consists of a low amylopectin starch.

In step (ii) wetting is carried out such that the starch-based powder will adhere to the centre when step (iii) is carried out. The centre is substantially coated with a wetting solution in order to wet it.

Step (ii) followed by step (iii) results in the formation of one layer of coating. Steps (ii) and (iii) may be repeated as desired in order to build up layers of coating prior to carrying out expansion step (iv).

In one embodiment, steps (ii) and (iii) are repeated at least three times in order to build up at least three layers of coating prior to carrying out expansion step (iv). In a series of embodiments, steps (ii) and (iii) are repeated at least five times, at least seven times, at least ten times or at least fifteen times in order to build up at least five, at least seven, at least ten or at least fifteen layers of coating respectively. In a particular embodiment, steps (ii) and (iii) are repeated ten times in order to build up ten layers of coating.

When more than one layer of coating is applied to the centre, the composition of the wetting solution in each step (ii) and/or the starch-based powder in each step (iii) may be varied for some or all of the layers or the same wetting solution and starch-based powder may be used throughout.

The first starch-based powder (for the first layer) may be different from or the same as the second starch-based powder (for the second layer) and the same as or different from subsequent starch-based powders (for subsequent layers) and the same as or different from the final starch-based powder (for the outermost layer).

Steps (ii) and (iii) may, for example, be carried out by enrobing or panning the centres. Conveniently, the process of steps (ii) and (iii) are carried out by panning the centre in a panning drum.

The centre may be heated whilst steps (ii) and (iii) are being carried out.

The starch-based powder may be expanded by heating the coated centre to the required expansion temperature. The method of heating will depend on the required temperature, but heating will in general be carried out in an oven or in oil. Suitable heating temperatures are about the conventional temperatures for expanding starch materials. In the case of heating in an oven (baking), temperatures are likely to be from 175°C to 250°C. For frying in oil, temperatures are likely to be about 160°C.

If desired, the process may comprise an additional step after step (iv) in which the starch-coated confectionery product is coated with a confectionery coating. For example, the starch-coated confectionery product may be enrobed with a chocolate composition.

The heat-sensitive centre may comprise any heat-sensitive foodstuff. For example, the heat-sensitive centre may comprise chocolate, or confectionery. Suitable chocolate centres include dark chocolate, milk chocolate and white chocolate. Suitable confectionery centres include toffee, caramel, nougat, and marshmallow, as well as ready-made confectionery products such as M&Ms®, Bonibon®, Smarties®, or Mini Eggs®.

The wetting solution comprises an edible material in water. The wetting solution may in one series of embodiments have a dry solids (D.S.) content of from 20 to 80wt%, from 33 to 66wt% or from 45 to 55wt%. For example, the wetting solution may have a dry solids content of about 50wt%.

The wetting solution may comprise a sweetener and/or a hydrocolloid (both edible materials) since these have adhesive properties. Suitable sweeteners include sugars (e.g. sucrose, dextrose, glucose, fructose, lactose, trehalose and maltose and any combination thereof including honey), sugar-substitutes or combinations thereof. Suitable sugar substitutes include sugar alcohols (e.g. sorbitol, xylitol, mannitol, lactitol, isomalt, maltitol and in a particular embodiment sorbitol and/or xylitol), and intense sweeteners (e.g. aspartame, acesulfame-K, cyclamates, saccharin, sucralose, neohesperidin, dihydrochalone, alitame, stena sweeteners, glycyrrhizin and in a particular embodiment sucralose and/or acesulfame-K). Suitable hydrocolloids include gum arabic, gelatin, carageenan, agar and pectin. In one embodiment, the wetting solution comprises sucrose and/or glucose.

Starch is a mixture of two complex carbohydrates, amylose (a linear polymer of glucose) and amylopectin (a highly branched polymer of glucose). Starches with high amylopectin content are associated with high expansion properties. Some starches, such as waxy maize flour and cassava flour, have a naturally high amylopectin content and are highly expandable. Modified starches may also have a high amylopectin content and may be highly expandable. For example, pregelatinized starches such as pregelatinized waxy maize flour and pregelatinized sticky rice flour, have high amylopectin contents and expand more on baking than most native (unmodified) starches.

In one embodiment, the starch-based powder comprises a starch that has a high amylopectin content i.e. an amylopectin to amylose ratio of at least 85:15, or at least 90:10 or at least 95:5. The starch-based powder may also comprise a relatively low amylopectin content starch (i.e. a starch having an amylopectin to amylose ratio of less than 85:15). In a further embodiment, the starch-based powder comprises both a high amylopectin content starch and a relatively low amylopectin content starch.

The starch-based powder may comprise a starch derived from wheat, maize (corn), potato, rice, arracacha, buckwheat, banana, barley, cassava, kudzu, peas, oca, sago, sorghum, sweet potato, taro and yarns, or any combination thereof. In one embodiment, the starch-based powder comprises a wheat starch, a maize (corn) starch, a potato starch, a rice starch or any combination thereof.

Suitable modified starches include pre-gelatinized starches such as pre-gelatinized waxy maize flour and pre-gelatinized sticky rice flour.

When the starch-based powder comprises both a high amylopectin content starch and a relatively low amylopectin content starch, the ratio of high amylopectin content starch to relatively low amylopectin starch may be in one embodiment from 10:90 to 90:10, in another embodiment from 25:75 to 75:25, in a further embodiment from 33:67 to 33:67, in a yet further embodiment from 40:60 to 60:40 and a yet further embodiment 50:50. In a particular embodiment, the ratio of high amylopectin content starch to relatively low amylopectin starch is around 50:50.

It will be understood that the relatively low amylopectin content starch will be less expandable than the high amylopectin content starch and by controlling the ratio of the two starches in the starch-based powder the overall extent of the expansion of the starch-based powder may be controlled.

The centre is a heat sensitive centre such as chocolate, and one or more protective coatings are provided around the heat sensitive centre. Thus the process comprises a step prior to the first coating with starch-based powder of providing the heat-sensitive centre with a protective coating. Hereto, we have found that starch-based powders that do not expand or expand very little are suitable for protecting the heat-sensitive centre. The protective coating is a relatively low amylopectin content starch. Suitable starch-based powders include native starches such as wheat starch or potato starch. Where a protective coating is provided it may be necessary to wet the heat-sensitive centre prior to applying the protective coating (a relatively low amylopectin content starch is used as the protective coating). It will be understood that reference to wetting the heat-sensitive centre in step (ii) is to wetting the protective coating.

In one embodiment, an additional step is carried out prior to the expansion of the starch-based powder in which the starch-coated centre is provided with a less expandable outer coat of starch-based powder. The underlying starch layer or layers will expand more than the outermost less expanding starch layer thereby causing an attractive cracking effect in the outermost layer. In a further embodiment, the outer coat of less expandable starch-based powder comprises a native starch. In one series of further embodiments, the outer coat of less expandable starch-based powder comprises at least 70wt%, at least 80wt%, or at least 90wt% native starch.

The starch-based powder may comprise further ingredients in addition to starch. In one embodiment, the starch-based powder may comprise at least one sweetener, at least one flavour ingredient, at least one dietary fibre, at least one protein (e.g. gluten), at least one food colouring, at last one leavening agent (e.g. baking powder), at least one vitamin or mineral supplement or any combination thereof.

Suitable sweeteners include sugars (e.g. sucrose, dextrose, glucose syrup solids, fructose, lactose, trehalose and maltose and any combination thereof), sugar alcohols (e.g. sorbitol, xylitol, mannitol, lactitol, isomalt, maltitol, or any combination thereof), intense sweeteners (e.g. aspartame, acesulfame-K, cyclamates, saccharin, sucralose, neohesperidin, dihydrochalone, alitame, stena sweeteners, glycyrrhizin, or any combination thereof) and any combination of sugars, sugar alcohols and intense sweeteners.

Suitable flavour ingredients include those in solid form, for example, a powder. Suitable flavour ingredients include cocoa powder and spray dried flavoured powders such as spray dried fruit powder. In a further embodiment, the flavour ingredient is encapsulated in order to protect it from degradation on heating. For example, spray dried fruit powders are often encapsulated by spray drying fruit juice onto a maltodextrin base.

In a further embodiment one or more food colourings may be employed in different layers in order to emphasise the layered structure of the confectionery product.

Embodiments of the invention will now be described by way of example only.

### METHODOLOGY

A panning drum (capacity of 0.5 to 2kg) was rotated at approximately 200rpm and heated to approximately 30°C by applying a hair dryer to the outside of the drum. The confectionery centres were weighed and then added to the panning drum. Sufficient wetting solution was added to the confectionery centres in the panning drum to just cover (wet) the surfaces of the centres (approximately 0.3 g wetting solution per gram of confectionery centres). Powdered starch mix was then added to the wetted centres until all of the centres were lightly coated with the starch mix (approximately 1.3g starch mix per gram of wetting solution). Once the confectionery centres had one layer of wetting solution/starch mix coating, the process was repeated to build up additional layers. It will be appreciated that excess wetting solution and starch mix must be employed because some of the wetting solution and starch mix will adhere to the panning drum. On average each confectionery centre was coated with 10 layers of wetting solution/ starch mix such that the weight ratio of centre to shell (wetting solution and starch mix) was from 20-25% centre to 75-80% shell. The coated confectionery centres were then transferred to an oven and baked for 10 to 15 minutes at 200°C.

All percentages are by weight.

### INGREDIENTS

| | |
|---|---|
| Confectionery centres | Dried, diced apricot |
| | Peanut |
| | Bonibon® (a sugar shelled chocolate product made by Cadbury Schweppes) |
| | Chocolate (Barry Callebaut) |
| Wetting solutions | 50% D.S. (dry solids) sucrose solution |
| | 50% D.S. (dry solids) glucose solution |
| Starch mix ingredients | Standard wheat flour |
| | Modified starch (sold under the trade name Pregeflo® CH10G, by Roquette Frères) - a pre-gelatinized modified waxy maize starch |
| | Sucrose (sold under the trade name Silk Sugar®, by British Sugar) - a fine sugar having an average particle size of 9 microns (9µm) |
| | Banana flavour (spray dried on maltodextrin base, Symrise) |
| | Orange flavour |

### Examples 1 to 3

| | Reference Ex. 1 | Reference Ex. 2 | Comparative Ex. 3 |
|---|---|---|---|
| Confectionery centre | Dried diced apricot | Peanut | Chocolate |
| Wetting solution | 50% D.S. sucrose solution | 50% D.S. sucrose solution | 50% D.S. sucrose solution |
| Starch mix | 40% standard wheat flour | 40% standard wheat flour | 40% standard wheat flour |
| | 40% modified starch | 40% modified starch | 40% modified starch |
| | 20% sucrose | 20% sucrose | 20% sucrose |
| Density (g/cm³) | 0.35 | Not available | Not available |
| Weight ratio of centre/shell before expansion | 24/76 | Not available | Not available |

The apricot and peanut products (Ex. 1 and Ex. 2) are successful. The coating expands to provide an attractive baked product. The chocolate centre (Ex. 3) is heat sensitive and leaked out of the coating when heated in the oven at 200°C.

### Example 4

| | Ex. 4 | Ex. 5 |
|---|---|---|
| Confectionery centre | Chocolate | Chocolate |
| Wetting solution | 50% D.S. sucrose solution | 50% D.S. sucrose solution |
| Protective coating | 100% standard wheat flour | 100% standard wheat flour |
| Starch mix | 40% standard wheat flour | 40% standard wheat flour |
| | 40% modified starch | 40% modified starch |
| | 20% sucrose | 20% sucrose |

In response to the problem of leakage of chocolate shown in Ex. 3 an improved process was developed for heat-sensitive centres. The heat sensitive centre was first wetted with sucrose solution followed by a protective coating comprising 100% wheat starch before additional coatings with the starch mix of examples 1 to 3. Wheat starch has a high amylose level as compared to modified starch and does not expand as much as the starch mix that contains both wheat starch and modified starch. In Ex. 4 the chocolate centre was coated with two layers of the protective coating followed by eight layers of the starch mix. In Ex. 5 the chocolate centre was coated with one layer of the protective coating followed by nine layers of the starch mix. Neither Ex. 4 nor Ex. 5 leaked when heated in the oven. This suggests that a high amylose level starch mix protects the centre from the heat of the oven. The coating around the chocolate centre was harder in Ex. 4 than in Ex. 5. Depending on consumer tastes, it may be desirable to have fewer layers of the protective coating whilst maintaining a sufficient barrier to prevent leakage.

### Examples 6 and 7

| | Reference Ex. 6 | Reference Ex. 7 |
|---|---|---|
| Confectionery centre | Bonibon® | Bonibon® |
| Wetting solution | 50% D.S. sucrose solution | 50% D.S. sucrose solution |
| Starch mix | 68% standard wheat flour | 50% standard wheat Hour |
| | 32% modified starch | 50% modified starch |

Confectionery products were prepared using a starch mix comprising wheat flour and modified starch. The ratio of wheat flour to modified starch affected the expansion of the coating. Ex. 7 contains more modified starch than Ex. 6 and had greater and more homogeneous expansion than Ex. 6. Ex. 7 therefore has a lower density than Ex. 6.

### Examples 8 to 10

| | Reference Ex. 8 | Reference Ex. 9 | Reference Ex. 10 |
|---|---|---|---|
| Confectionery centre | Bonibon® | Bonibon® | Bonibon® |
| Wetting solution | 50% D.S. sucrose solution | 50% D.S. sucrose solution | 50% D.S. sucrose solution |
| Starch mix | 20% sucrose | 19.6%sucrose | 19.4% sucrose |
| | 80% modified starch | 39.2% modified starch | 38.8% modified starch |
| | | 39.2% standard wheat flour | 38.8% standard wheat flour |
| | | 2.0% banana flavour | 2.9% orange flavour |
| Cracking Effect | n/a | n/a | Standard wheat flour |
| Enrobing | n/a | Dark compound coating | n/a |
| Density (g/cm³) | 0.19 | 0.38 | 0.33 |
| Weight ratio of centre/shell before expansion | 24/76 | 20/80 | 16/84 |
| Change in weight ratio after expansion | -24% | -21% | -23% |

Ex. 8 expanded even more than Ex. 7 but the expansion was not homogeneous. A gap formed around the confectionery centre providing an interesting hollow effect. Ex. 8 had a density of just 0.19g/cm³.

Ex. 9 was additionally enrobed with a dark compound coating. Ex. 10 was coated with an outer coat of standard wheat flour prior to expansion. The outer coat of standard wheat flour did not expand as much as the underlying layers that comprised modified starch thereby resulting in an attractive cracked effect in the final product.

## Claims

1. A process for the preparation of a starch-coated confectionery product comprising:
providing a heat-sensitive centre;
wetting the heat-sensitive centre;
coating the wetted heat-sensitive centre with a starch-based powder; and
expanding the starch-based powder to produce the starch-coated confectionery product,
wherein the heat-sensitive centre is coated with a protective coating prior to the first coating with the starch-based powder,the protective coating consisting of a low amylopectin starch.

2. The process according to claim 1, wherein the wetting and the coating are repeated at least three times in order to build up at least three layers of coating prior to the expansion.

3. The process according to claim 1 or 2, wherein the wetting and the coating are carried out by panning the heat-sensitive centre.

4. The process according to any preceding claim, wherein the starch-based powder is expanded by heating the coated heat-sensitive centre to a required expansion temperature.

5. The process according to any preceding claim, wherein the starch-coated confectionery product is coated with a confectionery coating after the expansion.

6. The process according to any preceding claim, wherein the heat-sensitive centre comprises chocolate or confectionery.

7. The process according to any preceding claim, wherein the wetting is carried out by substantially coating the heat-sensitive centre with a wetting solution comprising a sweetener and/or a hydrocolloid.

8. The process according to any preceding claim, wherein the starch-based powder comprises a starch having an amylopectin to amylose ratio of at least 85:15.

9. The process according to claim 8, wherein the starch having an amylopectin to amylose ratio of at least 85:15 is a pre-gelatinized starch such as pre-gelatinized waxy maize flour or pre-gelatinized sticky rice flour.

10. The process according to any preceding claim, wherein the wetted and coated heat-sensitive centre is provided with an outer coat of a starch-based powder prior to the expansion, said outer coat being less expandable than the starch-based coating to which it is applied.

11. A confectionery product comprising a heat-sensitive centre enclosed successively within a protective coating and an expanded starch coating producible by the process of any preceding claim wherein the protective coating consists of a low amylopectin starch.

12. A starch-coated confectionery product comprising a heat-sensitive centre enclosed successively within a protective coating and an expanded starch coating, wherein the protective coating consists of a low amylopectin starch.

13. The product or process of any one of the preceding claims wherein the low amylopectin starch is a native starch.

14. The product or process of claim 13, wherein the native starch is a wheat starch or a potato starch.

## Patentansprüche

1. Verfahren für die Herstellung eines stärkebeschichteten Konfektprodukts umfassend:
Bereitstellen einer wärmeempfindlichen Füllung;
Benetzen der wärmeempfindlichen Füllung;
Beschichten der benetzten wärmeempfindlichen Füllung mit einem Pulver auf Stärkebasis; und
Expandieren des Pulvers auf Stärkebasis, um das stärkebeschichtete Konfektprodukt herzustellen,
wobei die wärmeempfindliche Füllung vor der ersten Beschichtung mit dem Pulver auf Stärkebasis mit einer Schutzbeschichtung beschichtet wird, wobei die Schutzbeschichtung aus einer Stärke von niedrigem Amylopectingehalt besteht.

2. Verfahren nach Anspruch 1, wobei das Benetzen und das Beschichten mindestens dreimal wiederholt werden, um vor der Expansion mindestens drei Schichten Beschichtung aufzubauen.

3. Verfahren nach Anspruch 1 oder 2, wobei das Benetzen und das Beschichten durch Schwenken der wärmeempfindlichen Füllung ausgeführt werden.

4. Verfahren nach einem der vorhergehenden Ansprüche, wobei das Pulver auf Stärkebasis durch Erhitzen des beschichteten wärmeempfindlichen Füllung auf eine erforderliche Expansionstemperatur expandiert wird.

5. Verfahren nach einem der vorhergehenden Ansprüche, wobei das stärkebeschichtete Konfektprodukt nach der Expansion mit einer Konfektbeschichtung beschichtet wird.

6. Verfahren nach einem der vorhergehenden Ansprüche, wobei die wärmeempfindliche Füllung Schokolade oder Konfekt umfasst.

7. Verfahren nach einem der vorhergehenden Ansprüche, wobei das Benetzen durch beträchtliches Beschichten der wärmeempfindlichen Füllung mit einer Benetzungslösung durchgeführt wird, die ein Süßungsmittel und/oder ein Hydrokolloid umfasst.

8. Verfahren nach einem der vorhergehenden Ansprüche, wobei das Pulver auf Stärkebasis eine Stärke umfasst, die ein Verhältnis von Amylopectin zu Amylose von mindestens 85:15 aufweist.

9. Verfahren nach Anspruch 8, wobei die Stärke, die ein Verhältnis von Amylopectin zu Amylose von mindestens 85:15 aufweist, eine vorgelatinierte Stärke, wie beispielsweise vorgelatiniertes wachsartiges Maismehl oder vorgelatiniertes klebriges Reismehl, ist.

10. Verfahren nach einem der vorhergehenden Ansprüche, wobei die benetzte und beschichtete wärmeempfindliche Füllung vor der Expansion mit einer Außenbeschichtung aus einem Pulver auf Stärkebasis versehen wird, wobei die Außenbeschichtung weniger expandierbar ist als die Beschichtung auf Stärkebasis, auf die sie aufgebracht wird.

11. Konfektprodukt umfassend eine wärmeempfindliche Füllung, die der Reihe nach innerhalb einer Schutzbeschichtung und einer expandierten Stärkebeschichtung eingeschlossen ist, die durch das Verfahren nach einem der vorhergehenden Ansprüche herstellbar sind, wobei die Schutzbeschichtung aus einer Stärke von niedrigem Amylopectingehalt besteht.

12. Stärkebeschichtetes Konfektprodukt umfassend eine wärmeempfindliche Füllung, die der Reihe nach innerhalb einer Schutzbeschichtung und einer expandierten Stärkebeschichtung eingeschlossen ist, wobei die Schutzbeschichtung aus einer Stärke von niedrigem Amylopectingehalt besteht.

13. Produkt oder Verfahren nach einem der vorhergehenden Ansprüche, wobei die Stärke von niedrigem Amylopectingehalt eine native Stärke ist.

14. Produkt oder Verfahren nach Anspruch 13, wobei die native Stärke eine Weizenstärke oder eine Kartoffelstärke ist.

## Revendications

1. Procédé de préparation d'un produit de confiserie enrobé d'amidon comprenant:
la fourniture d'un centre sensible à la chaleur;
l'humidification du centre sensible à la chaleur;
l'enrobage du centre humidifié sensible à la chaleur à l'aide d'une poudre à base d'amidon; et
l'expansion de la poudre à base d'amidon afin de produire le produit de confiserie enrobé d'amidon,
dans lequel le centre sensible à la chaleur est enrobé d'un enrobage protecteur avant le premier enrobage avec la poudre à base d'amidon, l'enrobage protecteur étant constitué d'un amidon à faible teneur en amylopectine.

2. Procédé selon la revendication 1, dans lequel l'humidification et l'enrobage sont répétés au moins trois fois afin de constituer au moins trois couches d'enrobage avant l'expansion.

3. Procédé selon la revendication 1 ou 2, dans lequel l'humidification et l'enrobage sont conduits par balancement du centre sensible à la chaleur.

4. Procédé selon l'une quelconque des revendications précédentes, dans lequel la poudre à base d'amidon est expansée par chauffage du centre sensible à la chaleur enrobé jusqu'à une température souhaitée d'expansion.

5. Procédé selon l'une quelconque des revendications précédentes, dans lequel le produit de confiserie enrobé d'amidon est enrobé avec un enrobage pour confiserie après l'expansion.

6. Procédé selon l'une quelconque des revendications précédentes, dans lequel le centre sensible à la chaleur comprend du chocolat ou une confiserie.

7. Procédé selon l'une quelconque des revendications précédentes, dans lequel l'humidification est conduite en enrobant substantiellement le centre sensible à la chaleur d'une solution d'humidification comprenant un édulcorant et/ou un hydrocolloïde.

8. Procédé selon l'une quelconque des revendications précédentes, dans lequel la poudre à base d'amidon comprend un amidon ayant un rapport amylopectine à amylose d'au moins 85:15.

9. Procédé selon la revendication 8, dans lequel l'amidon ayant un rapport amylopectine à amylose d'au moins 85:15 est un amidon pré-gélatinisé tel qu'une farine de maïs cireux pré-gélatinisée ou une farine de riz gluant pré-gélatinisée.

10. Procédé selon l'une quelconque des revendications précédentes, dans lequel le centre sensible à la chaleur humidifié et enrobé est proposé avec un enrobage externe d'une poudre à base d'amidon avant l'expansion, ledit enrobage externe étant moins expansible que l'enrobage à base d'amidon auquel il est appliqué.

11. Produit de confiserie comprenant un centre sensible à la chaleur successivement enclos au sein d'un enrobage protecteur et d'un enrobage d'amidon expansé pouvant être produit selon le procédé selon l'une quelconque des revendications précédentes dans lequel l'enrobage protecteur consiste en un amidon à faible teneur en amylopectine.

12. Produit de confiserie enrobé d'amidon comprenant un centre sensible à la chaleur successivement enclos au sein d'un enrobage protecteur et d'un enrobage d'amidon expansé, dans lequel l'enrobage protecteur est constitué d'un amidon à faible teneur en amylopectine.

13. Produit ou procédé selon l'une quelconque des revendications précédentes dans lequel l'amidon à faible teneur en amylopectine est un amidon naturel.

14. Produit ou procédé selon la revendication 13, dans lequel l'amidon naturel est un amidon de blé ou un amidon de pomme de terre.
